# EUROPEAN PATENT SPECIFICATION

(11) **EP 2 037 836 B1**
(45) Date of publication and mention of the grant of the patent: **22.03.2017**
(21) Application number: 07826130.2
(22) Date of filing: 24.08.2007
(51) Int. Cl.: A61C 17/02

(54) **A LOCATING/GUIDANCE TIP ASSEMBLY FOR A LIQUID DROPLET SPRAY TEETH CLEANING SYSTEM**
POSITIONIERUNGS-/FÜHRUNGSSPITZE FÜR EIN FLÜSSIGTRÖPFCHEN-SPRAYSYSTEM ZUR ZAHNREINIGUNG
ENSEMBLE EMBOUT DE REPÉRAGE/GUIDAGE POUR UN SYSTÈME DE NETTOYAGE DES DENTS PAR PULVÉRISATION DE GOUTTELETTES DE LIQUIDE

(43) Date of publication of application: 25.03.2009
(73) Proprietor: Koninklijke Philips N.V., 5656 AE Eindhoven (NL)
(72) Inventor: KOTLARCHIK, Garrett, San Jose, California 95131 (US); GREZ, Joe, San Jose, California 95131 (US); BLACK, Craig, San Jose, California 95131 (US); MASSEE, Bart J., San Jose, California 95131 (US); BAS, Paul, San Jose, California 95131 (US); WACHTERS, Peter Alexander, San Jose, California 95131 (US); ROCKET, Katrina, San Jose, California 95131 (US); BENNING, Wolter, San Jose, California 95131 (US); WOOD, Jerry, San Jose, California 95131 (US); DUINEVELD, Paulus Cornelis, San Jose, California 95131 (US); JANSSEN, Jozef Johannes Maria, San Jose, California 95131 (US); LEEUW, Piet de, San Jose, California 95131 (US)
(74) Representative: de Haan, Poul Erik
(86) International application number: PCT/IB2007/053402
(87) International publication number: WO 2008/001337

(56) References cited:
- WO-A-2005/055863
- WO-A-2005/058186
- WO-A2-2007/101210
- FR-A- 1 121 214
- US-A- 3 496 933
- US-A- 4 315 741
- US-A- 4 611 992
- US-A- 4 787 845
- US-A- 5 890 898

## Description

This invention relates generally to liquid droplet spray teeth cleaning systems, and more particularly concerns a droplet spray portion of the teeth cleaning system which includes a guidance tip for properly locating the droplet spray relative to the teeth.

Droplet spray teeth cleaning systems are generally known, and various droplet spray systems are described in several patents and published patent publications. One such patent publication is WO200507034. In that application, liquid (water) droplets are generated and then accelerated to a desired velocity by a stream of gas, such as air. In other systems, the liquid droplets are accelerated by other means, such as a swirl nozzle, using high pressure, to a desired velocity. The liquid droplets must have a particular size and velocity to produce an effective cleaning effect on the teeth.

Many of these devices are designed for home use, which requires the user himself/herself to properly locate the spray tip of the device relative to the teeth, so that the spray reaches the desired area of the teeth. This has proven to be a challenge, particularly locating the spray on the interproximal spaces between the teeth. It is difficult for the user to properly locate the spray tip because the spray itself cannot be directly felt by the user.

US 5 890 898 A discloses a droplet spray system including a splash guard. Patent publication WO 2007/101210 A2 with date of priority 27.02.2006 and date of publication 07.09.2007 discloses a similar spray assembly.

It is thus desirable that a droplet spray system include a locating/guidance tip assembly to position the droplet spray properly for effective cleaning, particularly over the interproximal area, but also over the front surface of the teeth as well. In addition, the distance between the origin of the spray and the teeth should be properly controlled for optimal efficiency as well as safety. The spray nozzle cannot be too close, which might cause damage to the gums and other tissues, but also cannot be too far away, as this results in a decrease in efficacy. The guidance tip should thus be arranged to provide both distance and location functions of the device relative to the teeth.

Furthermore, in some cases, it is important to be able to safely and effectively accommodate teeth braces with a droplet spray cleaning system.

Accordingly the present invention is a spray assembly for a droplet spray system for cleaning teeth, comprising: a spray assembly for use with a droplet spray teeth cleaning system having a head portion including a rigid or flexible neck, at the end of which is a spray nozzle through which a spray of liquid is directed to the teeth for cleaning thereof and a guidance member at the very end of the neck, which is configured to locate the spray on the teeth, wherein the guidance member is in the form of a sphere or cone which partially surrounds the nozzle, wherein the exterior surface of the guidance member is curved so as to fit readily between adjacent teeth and the gums, wherein the guidance member includes a spray opening through which the spray from the nozzle is directed to the teeth, wherein the spray opening of the guidance member is located a distance within a range of 1-15 mm from a nozzle opening of the nozzle, wherein the diameter of the spray opening of the guidance member is such that it is slightly larger than the desired footprint of the spray on the teeth, wherein the conical/spherical guidance member includes other openings which are provided around the periphery thereof, and which allow fluid to escape therethrough, and wherein the guidance member is made from a soft pliable material.
Figure 1 is a simple schematic diagram showing in general a droplet spray teeth cleaning system, which includes a spray assembly portion.
Figures 2A-2C are perspective views of several variations of the spray assembly system of the present invention, in particular a locating/guidance tip assembly.

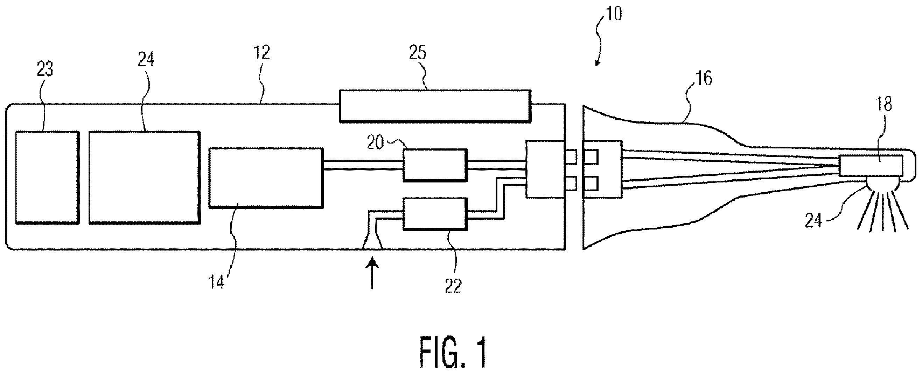

Figure 1 shows in general a droplet spray teeth cleaning system 10. A typical hand-held system for home use will include a body or handle portion 12 in which is located a source of liquid 14. In one arrangement, air and the liquid are moved to a head portion 16 of the system by pumps 20-22. The liquid and gas are directed to a spray assembly 18 in which the gas stream produces and accelerates liquid droplets to a desired velocity as they move out of a nozzle 24 at the end of the head portion to a desired location on the teeth.

In one example, the droplets have a size range of 10-15 mm and are accelerated to a velocity of approximately 30 meters per second. Other arrangements, however, with different size droplets and different velocities can be used, for instance, at velocities up to 70 meters per second. In the present embodiment, the head portion 16 is arranged to be replaceable relative to the handle portion, which includes sources of gas and liquid, the electronic control portion 24 and the power supply 23 for the system, as well as a user interface 25, with an on/off switch 30.

What is shown and described herein is a guidance tip/member which is located at the forward end of the head portion 16 for correctly positioning the spray nozzle 24 within the mouth relative to the teeth, in order to accomplish effective cleaning without damaging the tissue or gums of the user. It should be understood that the guidance member described and shown can be used with a variety of droplet spray cleaning systems.

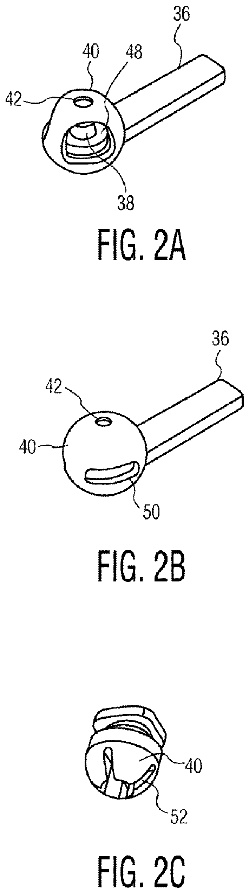

A preferred embodiment of a guidance member is shown in Figures 2A-2C. The head portion of the cleaning device includes a neck 36, which could be rigid or flexible, at the end of which is a spray nozzle 38, through which the accelerated liquid droplets are directed. In this embodiment, at the very end of neck 36, partially surrounding the spray nozzle, is a conical or approximately spherical element 40 which includes a spray opening 42, located a small distance, within the range of 1-15 mm, and more preferably 3-8 mm, from nozzle opening 38. The guidance member is made from a soft pliable material, such as rubber, which will not harm gums or other soft tissue.

Other openings in the conical/spherical member 40 are provided around the periphery thereof. These openings could be of various configurations, as shown in Figures 2A-2C, including spaced parabolic openings 48 in Figure 2A, spaced horizontal slots 50 in Figure 2B or spaced vertical slots 52 in Figure 2C, which connect to spray opening 42. These openings are for the purpose of allowing venting of liquid, and optionally gas, during operation of the system, to prevent pooling of liquid around the nozzle.

The exterior surface of guidance member 40 is curved so as to fit readily between adjacent teeth and the gums, thus readily locating the interproximal area of the teeth for the user.

The diameter of the spray opening 42 is such that it is slightly larger than the desired footprint of the spray on the teeth. Further, the distance between the guidance member 40 and spray nozzle 38 provides a safe stand-off distance between the spray as it emerges from the nozzle and the teeth. In operation, the user will simply press the guidance member against the teeth, thereby guaranteeing a safe stand-off distance for all cleaning, as well as proper interproximal location when located between the teeth. The guidance member can be moved sideways to locate the spray accurately onto the front surface of the teeth as well.

Hence, a guidance tip member has been disclosed which is located at the end of a spray head assembly portion of a droplet spray teeth cleaning system. This arrangement informs the user of the location of the spray relative to the teeth and gums, and reliably positions the spray for interproximal cleaning, as well as the front portions of the teeth. The location of the spray assembly is difficult for the user to ascertain without a guidance member since the location of the spray is often not clearly and precisely recognizable by a sensory feel of the spray.

It should be understood that the guidance member disclosed herein could be used with a hand-held portion of a tethered droplet spray cleaning system as well as a stand-alone hand held unit, as shown in Figure 1. Further, the guidance member can be used with various droplet spray teeth cleaning systems/devices, including those which are not gas assisted, i.e. those which do not use gas to produce and accelerate the liquid droplets.

## Claims

1. A spray assembly for a droplet spray system for cleaning teeth, comprising: a spray assembly for use with a droplet spray teeth cleaning system (10) having a head portion (16) including a rigid or flexible neck (36), at the end of which is a spray nozzle (24) through which a spray of liquid is directed to the teeth for cleaning thereof and a guidance member (40) at the very end of the neck (36), which is configured to locate the spray on the teeth, wherein the guidance member (40) is in the form of a sphere or cone which partially surrounds the nozzle (24), wherein the exterior surface of the guidance member (40) is curved so as to fit readily between adjacent teeth and the gums, wherein the guidance member (40) includes a spray opening (42) through which the spray from the nozzle (24) is directed to the teeth, wherein the spray opening (42) of the guidance member (40) is located a distance within a range of 1-15 mm from a nozzle opening (38) of the nozzle (24), wherein the diameter of the spray opening (42) of the guidance member (40) is such that it is slightly larger than the desired footprint of the spray on the teeth, wherein the conical/spherical guidance member (40) includes other openings (48, 50, 52) which are provided around the periphery thereof, and which allow fluid to escape therethrough, and wherein the guidance member (40) is made from a soft pliable material.

2. The spray assembly of claim 1, wherein the spray opening (42) of the guidance member (40) is located a distance within a range of 3-8 mm from the nozzle opening (38) of the nozzle (24).

3. The spray assembly of claim 1, wherein the guidance member (40) is also configured to provide a safe stand-off distance between the teeth and the spray nozzle (24).

4. The spray system of claim 1, wherein the guidance member (40) is configured to locate the spray at an interproximal area of the teeth.

5. The spray assembly of claim 1, wherein the spray opening (42) is approximately circular, slightly larger than a desired spray footprint on the teeth, and wherein the other openings (48, 50, 52) are in the form of slots.

6. The spray assembly of claim 5, wherein the other openings (48, 50, 52) are in the form of spaced vertical slots (52) which connect to the spray opening (42).

## Patentansprüche

1. Sprühvorrichtung für ein Flüssigkeitströpfchen-Sprühsystem zur Zahnreinigung, Folgendes umfassend: eine Sprühvorrichtung zur Verwendung mit einem Flüssigkeitströpfchen-Sprühzahnreinigungssystem (10), das einen Kopfabschnitt (16) aufweist, einen starren oder flexiblen Hals (36) umfassend, an dessen Ende sich eine Sprühdüse (24) befindet, durch die ein Sprühnebel einer Flüssigkeit auf die Zähne gerichtet wird, um diese zu reinigen, und ein Führungselement (40) ganz am Ende des Halses (36), das konfiguriert ist, um den Sprühnebel auf den Zähnen zu lokalisieren, wobei das Führungselement (40) in Form einer Kugel oder eines Konus ausgeführt ist, und die Düse (24) teilweise umgibt, wobei die Außenfläche des Führungselements (40) gekrümmt ist, um einfach zwischen benachbarte Zähne und das Zahnfleisch zu passen, wobei das Führungselement (40) eine Sprühöffnung (42) enthält, durch die der Sprühnebel aus der Düse (24) auf die Zähne gerichtet wird, wobei sich die Sprühöffnung (42) des Führungselements (40) auf Abstand innerhalb eines Bereichs von 1-15 mm von einer Düsenöffnung (38) der Düse (24) befindet, wobei der Durchmesser der Sprühöffnung (42) des Führungselements (40) dergestalt ist, dass er etwas größer ist, als der gewünschte Fußabdruck des Sprühnebels auf den Zähnen, wobei das konische/kugelförmige Führungselement (40) weitere Öffnungen (48, 50, 52) enthält, die um dessen Peripherie herum vorhanden sind, und die es der Flüssigkeit erlauben, daraus zu entweichen, und wobei das Führungselement (40) aus einem weichen biegsamen Material gefertigt ist.

2. Sprühvorrichtung nach Anspruch 1, wobei sich die Sprühöffnung (42) des Führungselements (40) auf Abstand innerhalb eines Bereichs von 3-8 mm von einer Düsenöffnung (38) der Düse (24) befindet.

3. Sprühvorrichtung nach Anspruch 1, wobei das Führungselement (40) ebenfalls konfiguriert ist, um einen sicheren Raumabstand zwischen den Zähnen und der Sprühdüse (24) bereitzustellen.

4. Sprühsystem nach Anspruch 1, wobei das Führungselement (40) konfiguriert ist, um den Sprühnebel in einen interproximalen Bereich der Zähne zu setzen.

5. Sprühvorrichtung nach Anspruch 1, wobei die Sprühöffnung (42) in etwa kreisförmig ist, etwas größer als der gewünschte Fußabdruck des Sprühnebels auf den Zähnen, und wobei die weiteren Öffnungen (48, 50, 52) die Form von Schlitzen aufweisen.

6. Sprühvorrichtung nach Anspruch 5, wobei die weiteren Öffnungen (48, 50, 52) in Form von im Abstand angeordneten vertikalen Schlitzen (52) ausgeführt sind, die mit der Sprühöffnung (42) verbunden sind.

## Revendications

1. Ensemble de pulvérisation destiné à un système de pulvérisation de gouttelettes pour nettoyer les dents, comprenant : un ensemble de pulvérisation à utiliser avec un système de nettoyage des dents par pulvérisation de gouttelettes (10) comportant une partie tête (16) incluant un col rigide ou flexible (36), à l'extrémité duquel se trouve une buse de pulvérisation (24) à travers laquelle une pulvérisation de liquide est dirigée vers les dents pour le nettoyage de celles-ci et un élément de guidage (40) à l'extrémité même du col (36), qui est configuré pour positionner la pulvérisation sur les dents, dans lequel l'élément de guidage (40) se présente sous la forme d'une sphère ou d'un cône qui entoure partiellement la buse (24), dans lequel la surface extérieure de l'élément de guidage (40) est incurvée de manière à s'insérer facilement entre des dents adjacentes et les gencives, dans lequel l'élément de guidage (40) inclut une ouverture de pulvérisation (42) à travers laquelle la pulvérisation provenant de la buse (24) est dirigée vers les dents, dans lequel l'ouverture de pulvérisation (42) de l'élément de guidage (40) se situe à une distance dans une plage de 1-15 mm d'une ouverture de buse (38) de la buse (24), dans lequel le diamètre de l'ouverture de pulvérisation (42) de l'élément de guidage (40) est tel qu'il est légèrement plus grand que l'empreinte souhaitée de la pulvérisation sur les dents, dans lequel l'élément de guidage conique/sphérique (40) inclut d'autres ouvertures (48, 50, 52) qui se trouvent autour de la périphérie de celui-ci, et qui permettent au fluide de s'échapper par celles-ci, et dans lequel l'élément de guidage (40) se compose d'un matériau pliable souple.

2. Ensemble de pulvérisation selon la revendication 1, dans lequel l'ouverture de pulvérisation (42) de l'élément de guidage (40) se situe à une distance dans une plage de 3-8 mm de l'ouverture de buse (38) de la buse (24).

3. Ensemble de pulvérisation selon la revendication 1, dans lequel l'élément de guidage (40) est également configuré pour offrir une distance de sécurité entre les dents et la buse de pulvérisation (24).

4. Ensemble de pulvérisation selon la revendication 1, dans lequel l'élément de guidage (40) est configuré pour offrir positionner la pulvérisation au niveau d'une zone interproximale des dents.

5. Ensemble de pulvérisation selon la revendication 1, dans lequel l'ouverture de pulvérisation (42) est approximativement circulaire, légèrement plus grande qu'une empreinte de pulvérisation souhaitée sur les dents, et dans lequel les autres ouvertures (48, 50, 52) se présente sous la forme de fentes.

6. Ensemble de pulvérisation selon la revendication 5, dans lequel les autres ouvertures (48, 50, 52) se présentent sous la forme de fentes verticales espacées (52) qui relient l'ouverture de pulvérisation (42).
